# EUROPEAN PATENT APPLICATION

(11) **EP 1 380 866 A1**
(43) Date of publication of application: **14.01.2004**
(21) Application number: 02254889.5
(22) Date of filing: 11.07.2002
(51) Int. Cl.: G02B 6/38, G02B 6/42

(54) **Optical fiber coupling apparatus**

(71) Applicant: Agilent Technologies, Inc. - a Delaware corporation -, Palo Alto, CA 94303-0870 (US)
(72) Inventor: Healy, David, Stowmarket, Suffolk IP14 2NZ (GB); Gibson, Peter Charles, Hadleigh, Suffolk IP1 5PB (GB); Meadowcroft, Simon, Stowmarket, Suffolk IP14 1TY (GB)
(74) Representative: Coker, David Graeme

(57) **Abstract**

An optical connector assembly (1) includes a housing (2) having a longitudinal cavity (3) extending through the housing (2) and having a first end (4) for receiving an optical fibre patchcord (5) and a second end defining an aperture (6). An optical element (16), such as a lens, is positioned in the cavity (3) adjacent the aperture (6), so as to be in contact with an end of an optical fibre (7) within the patchcord (5). The lens (16) has substantially the same index of refraction as the core of the optical fibre (7) so that an optical signal is transmitted between the core of the optical fibre (7) and one face of the lens (16) with very little or no light reflected. Since light incident on the other face of the lens (16) is at an angle to the air-glass interface, any light reflected from the interface will not be substantially reflected back to its source.

## Description

### Field of the Invention

This invention relates to an apparatus for optically coupling an optical fibre and an optical component, such as a photodetector or phototransmitter (laser), so as to minimize the amount of light reflected from the fibre-component interface in a cost-effective manner.

### Background of the Invention

As is known, a typical receiver optical sub-assembly (ROSA) used in optical fibre communications systems includes a photodetector for receiving light (whether in the visual wavelength band or outside it) from a core of the optical fibre and needs to be constructed such that the fibre and the photodetector are aligned so that as much light as possible can be collected by the photodetector and be delivered to an active region of the photodetector so as to optimize the responsivity of the assembly.

A number of systems also require that the optical return loss (ORL) of the ROSA should not exceed a given limit. ORL is a measure of the amount of light that is reflected back into the core of the optical fibre from the assembly. Clearly, excessive reflection of light back into the optical fibre could cause interference with the operation of other optical components in the system and is undesirable. When a receiver ORL is specified, (for example at -27dB in the case of one modern system) it is usually because the amount of light reflected by the assembly must be lower than that reflected by from the end of a bare optical fibre or patchcord (typically -15dB in air).

It will be appreciated that similar considerations apply to optical transmitter modules in which an optical fibre is optically coupled to a laser, where the light is transmitted from the laser into the optical fibre. In such a case, reflected light would be coupled back into the laser, which would prevent the laser form operating correctly.

### Brief Summary of the Invention

The present invention therefore seeks to provide an apparatus for coupling an optical fibre and an optical component, such as a photodetector or phototransmitter (laser), which tries to achieve the requirements set out above in a relatively cheap manner which is more cost-effective than that known in the prior art.

Accordingly, in a first aspect, the invention provides an optical coupling apparatus for optically coupling an optical fibre and an optical component, the apparatus comprising a connector housing having a longitudinal cavity extending therethrough, a first end of the cavity being open for receiving an end of an optical fibre and a second end of the cavity providing an aperture for allowing light to pass therethrough to or from an optical component, and an optical element arranged within the longitudinal cavity so as to be located, when the optical fibre is in position in the cavity, between the first end of the optical fibre and the aperture, the optical element having a first face substantially in contact the first end of the optical fibre and a second face adjacent the aperture for allowing light to pass through the optical element.

In a preferred embodiment, the optical fibre is carried by a patchcord and the longitudinal cavity has a diameter substantially identical to that of the patchcord so as to constrain lateral movement of the patchcord within the cavity.

Preferably, the second end of the cavity is partly closed by the connector housing so as to define the aperture, which has a smaller lateral dimension than that of the cavity.

The part of the connector housing defining the aperture preferably constrains longitudinal movement of the optical element within the housing in the direction of the aperture.

In a preferred embodiment, the optical element has a refractive index substantially matching that of the optical fibre core.

The optical element is preferably a lens, but could alternatively be a block of light-transmitting material (preferably glass) having a first face substantially parallel to the first end of the optical fibre and a second face substantially parallel to the first face thereof.

According to a second aspect, the invention provides an optical module comprising an optical fibre mounted within the cavity of a coupling apparatus as described above, and an optical component located in optical alignment with the aperture.

In one embodiment, the optical component includes a lens arranged between the aperture and an active region of the optical component for focusing light between the optical element and the active region.

The optical component can be either a photodetector or a phototransmitter, e.g. a laser.

Alternatively, the optical component could be a second optical coupling apparatus such as that described above having a second optical fibre mounted therein.

### Brief Description of the Drawings

One embodiment of the invention will now be more fully described, by way of example, with reference to the drawings, of which:
FIG. 1 shows a schematic diagram of a conventional receiver optical sub-assembly; and
FIG. 2 shows a schematic diagram of a receiver optical sub-assembly according to an embodiment of the present invention.

### Detailed Description of the Drawings

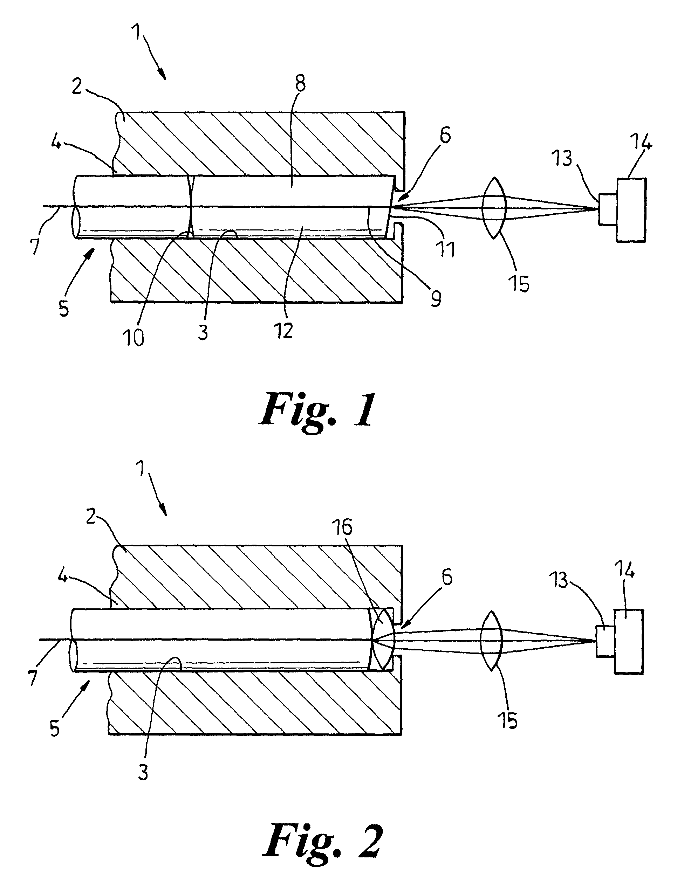

Thus, in a typical receiver optical sub-assembly (ROSA), as shown schematically in FIG. 1, an optical connector assembly 1 includes a housing 2 having a longitudinal cavity 3 extending through the housing 2 and having a first end 4, which is open to receive an optical fibre patchcord 5 and a second end defining an aperture 6.

The patchcord 5 is generally formed of a protective material, such as plastics material surrounding the optical fibre 7 that is used for transmission of the optical communication signals. The optical fibre 7 is, as is well know, formed of an optical core through which the optical signals are transmitted, surrounded by a cladding having a different refractive index from that of the core, such that the signals traveling within the core are constrained, as far as possible, to be internally reflected within the core to travel longitudinally along the core. The patchcord is a standard termination feature of such optical fibre communications cables.

Provided within the cavity 3 there is an angled fibre stub 8, which is positioned adjacent the aperture 6. The angled fibre stub 8 is a high precision optical component having an optical fibre 9 arranged within a ferrule 12 of zirconia. The stub 8 has a first face 10 which is polished for contact with the end of the patchcord 5, and a second face 11, which is polished at a slight angle, for example about 8°, to the longitudinal axis of the stub. The patchcord 5 is inserted into the open end 4 of the cavity 3 and pushed against the first face 10 of the fibre stub 8 so that the end of the optical fibre 7 is in contact with the end of the optical fibre 9. By having the optical fibres 7 and 9 aligned and in contact with each other, the optical signal from the core of optical fibre 7 is transmitted into the core of optical fibre 9 with very little or no light reflected back into the optical fibre 7 in patchcord 5.

The optical signal is then transmitted through the optical fibre 9 and is emitted from the angled second face 11 of the stub 8 through the aperture 6. Of course, since the second face 11 is at an angle, the light will emerge at an angle, although this is not shown since the angle is, typically, relatively small. At the interface between the optical fibre core and the air, about 96% of the light is transmitted and starts to diverge, since there is no mechanism for constraining its path, and about 4% is reflected from the air-glass interface back into the stub 8. However, since the interface is at an angle to the core, the light is not reflected directly back into the core, but into the zirconia ferrule 12, where it dissipates.

The light transmitted from the aperture 6 is divergent and therefore a lens 15 is provided to focus the light onto an active region 13 of the optical component, such as a photodetector 14. Since, however, the active region of a photodetector is usually relatively small, for example having a diameter of 30-100µm, the connector assembly 1 and the optical detector 14 must be accurately aligned in order to make sure that the light will be incident upon the active region. The ORL performance of this arrangement is usually better than -30dB.

The above described connector assembly is, therefore, both expensive to manufacture, because the optical fibre stub is a precision element requiring expensive materials and manufacturing techniques, including accurate polishing, and expensive to utilize, since the techniques used to align the connector assembly and the optical component are both slow and require specialized equipment. Furthermore, even after alignment, the connector assembly and the optical component are not, of course, co-axial, because the light emerges from the stub8 at an angle.

Therefore, as shown schematically in FIG. 2, where the same elements have the same reference numerals as in FIG. 1, a connector assembly 1, includes a housing 2 having a longitudinal cavity 3 extending through the housing 2 and having a first end 4, which is open to receive an optical fibre patchcord 5 and a second end defining an aperture 6.

Provided within the cavity 3 there is an optical element 16, positioned adjacent the aperture 6, and having substantially the same index of refraction as the core of the optical fibre 7 in the patchcord 5. The optical element 16 is conveniently a lens having a first polished side which is in contact with the end of the patchcord 5 so that the end of the optical fibre 7 is in contact with index matched lens. In this way, the optical signal from the core of optical fibre 7 is transmitted into the lens 16 with very little or no light reflected back into the optical fibre 7 in patchcord 5.

The optical signal is then transmitted through the lens 16 and is emitted from its other side through the aperture 6 to the lens 15, which focuses it onto the active region 13 of photodetector 14. As will be apparent, the light diverges within the lens 16 after it enters from the optical fibre 7, and is then refracted at the air-glass interface at the other side of the lens 16. Again, approximately 96% of the light will pass through the air-glass interface, and about 4% will be reflected. However, the reflected light, coming at an angle to the other side of the lens, will not be reflected back towards the core of the optical fibre 7 and will, therefore, dissipate in the lens or refract out of the in other directions.

The use of lens 16 also provides the advantage that light exiting the arrangement will be less divergent so that alignment of the optical arrangement will be less sensitive to the position of the connector assembly along the optical axis of the system. Furthermore, by selecting appropriate lenses, the optical alignment can also be made less sensitive to the lateral alignment of the connector assembly. A simple twin lens system of this type can therefore tolerate misalignments of the connector assembly four times greater than that currently acceptable with a single lens and an angled stub arrangement, whole still providing an ORL better than -30dB, provided that the refractive index of the lens 16 closely matches that of the optical fibre core. If the overall alignment tolerance of a typical assembly (based on a photodetector with a 90µm diameter active region and designed for a single mode patchcord) can be maintained to within 50 - 100µm, then there would be no need to actively align the connector assembly. This embodiment therefore offers the potential for passive alignment of the connector assembly to the photodetector, while still providing similar ORL performance as has hitherto only been possible using expensive angles fibre stubs.

It will be appreciated that although only one particular embodiment of the invention has been described in detail, various modifications and improvements can be made by a person skilled in the art without departing from the scope of the present invention. For example, instead of using a lens, the optical element 16 can be a simple passive component such as a block of light-tranmissive material, such as glass or plastics material, whose refractive index would usually be closely matched to the refractive index of the core of the optical fibre 7. In this case, the input face of the block should be appropriately shaped and polished so that it contacts the end of the optical fibre 7 in the patchcord 5 so that reflection losses at the interface between the optical fibre and the glass block are minimized. Again, therefore, as the light enters the glass block, it diverges, so that, when it reaches the other side of the glass block (which also be appropriately polished), it is at an angle to the air-glass interface so that the reflected portion is not directed back into the core of optical fibre 7. Of course, if the glass block is used, the light exiting it is still divergent and may need more aligning and focusing than the embodiment described above. Nevertheless, it will provide at least a similar arrangement to that of the angled fibre stub while providing the advantages of being optically coaxial and being cheaper.

In a different embodiment, the connector assembly can be a transmitter assembly, rather than a receiver assembly, such that the photodetector is replaced by a phototransmitter, usually a laser. In this case, reflection of light from the glass-air interface would be reflected back into the laser, which is undesirable. Use of the angled fibre stub would minimize such reflections back into the laser, but it is an expensive component. On the other hand, the present invention also minimizes reflections from the air-glass (or other light-transmissive material) interface, it does so at a substantially reduced cost.

## Claims

1. An optical coupling apparatus (1) for optically coupling an optical fibre (7) and an optical component (14), the apparatus (1) comprising:
a connector housing (2) having a longitudinal cavity (3) extending therethrough, a first end (4) of the cavity being open for receiving an end of an optical fibre and a second end of the cavity providing an aperture (6) for allowing light to pass therethrough to or from an optical component (14); and
an optical element (16) arranged within the longitudinal cavity (3) so as to be located, when the optical fibre (7) is in position in the cavity (3), between the first end of the optical fibre (7) and the aperture (6), the optical element (16) having a first face substantially in contact with the first end of the optical fibre and a second face adjacent the aperture (6) for allowing light to pass through the optical element.

2. An optical coupling apparatus according to claim 1, wherein the optical fibre (7) is carried by a patchcord (5) and the longitudinal cavity (3) has a diameter substantially identical to that of the patchcord (5) so as to constrain lateral movement of the patchcord (5) within the cavity (3).

3. An optical coupling apparatus according to either claim 1 or claim 2, wherein the second end of the cavity is partly closed by the connector housing (2) so as to define the aperture (6), which has a smaller lateral dimension than that of the cavity (3).

4. An optical coupling apparatus according to any preceding claim, wherein the part of the connector housing (2) defining the aperture (6) constrains longitudinal movement of the optical element (16) within the housing in the direction of the aperture.

5. An optical coupling apparatus according to any preceding claim, wherein the optical element (16) has a refractive index substantially matching that of the optical fibre core.

6. An optical coupling apparatus according to any preceding claim, wherein the optical element (16) is a lens.

7. An optical coupling apparatus according to any one of claims 1 to 5, wherein the optical element (16) is a block of light-transmitting material having a first face substantially parallel to the first end of the optical fibre and a second face substantially parallel to the first face thereof.

8. An optical coupling apparatus according to claim 7, wherein the light-transmitting material is glass.

9. An optical module comprising an optical fibre (7) mounted within the cavity of a coupling apparatus according to any preceding claim, and an optical component (14) located in optical alignment with the aperture (6).

10. An optical module according to claim 9, wherein the optical component (14) includes a lens (15) arranged between the aperture (6) and an active region (13) of the optical component (14) for focusing light between the optical element (16) and the active region (13).

11. An optical module according to either claim 9 or claim 10, wherein the optical component is a photodetector.

12. An optical module according to either claim 9 or claim 10, wherein the optical component is a phototransmitter.

13. An optical module according to either claim 9 or claim 10, wherein the optical component is a second optical coupling apparatus according to any one of claims 1 to 8 having a second optical fibre mounted therein.
